# EUROPEAN PATENT APPLICATION

(11) **EP 2 103 208 A1**
(43) Date of publication of application: **23.09.2009**
(21) Application number: 08004970.3
(22) Date of filing: 17.03.2008
(51) Int. Cl.: A01K 1/03

(54) **Cage rack system and method for sampling airborne particles from a cage rack system**

(71) Applicant: Helmholtz Zentrum München Deutsches Forschungszentrum für Gesundheit und Umwelt (GmbH), 85764 Neuherberg (DE)
(72) Inventor: Brielmeier, Markus, 85748 Garching (DE); Schmidt, Jörg, 80538 München (DE)
(74) Representative: Vossius & Partner

(57) **Abstract**

The present invention is related to a cage rack system (1) for animals, particularly for laboratory animals. This system can accommodate or comprises a plurality of cages (4) ventilated individually or in groups. At least the majority of the cages (4) comprise at least one air-inlet (41) and at least one air-outlet (42). The cages (4) can be selected according to the race, size, the number and/or conditions of the animals. The invention further comprises an air guidance system (2) for delivering air to the air-inlet (41) and/or collecting air from the air-outlet (42) with integral or separated conduits (21-24). Further, there is provided at least one sampling unit (3) for collecting airborne particles from the air, the sampling unit (3) being adapted to collect the airborne particles by a cyclonic flow path to cause a separation of the particles from the air. The sampling unit (3) can have one or more components and can be arranged for analysing, evaluating, controlling and/or monitoring the incoming air and/or the outgoing air. The incoming air can be checked in order to have a basis for comparing the respective results with the results from one or more components of the air guidance system analysing, evaluating, controlling and/or checking the outgoing air. Alternatively or additionally to the cyclone the sampling unit (3) can be provided so as to be replacably insertable in one or more of the conduits (21-24).

## Description

### FIELD OF THE INVENTION

The present invention is directed to a cage rack system and a method for sampling airborne particles from a cage rack system. The present invention relates particularly to so-called IVC cage rack systems (individually ventilated micro-isolator cages) for laboratory animals.

### BACKGROUND OF THE INVENTION

Standardisation of husbandry and health parameters in animal experimentation is a prerequisite for *in vivo* biomedical research. In order to provide accurate and valid results, animals used for scientific research, in particular drug related research, have to be kept free of infectious agents as infectious agents may cause diseases or may even interfere with experimental results in the absence of clinically observable symptoms or impaired host function. Defined hygienic states are called "Specific Pathogen Free" (SPF), which refers to laboratory animals that are tested free of particular pathogens. Use of SPF animals ensures that pathogens and infections do not interfere with the experiments carried out, thus avoiding false results which may prove vital at a later stage, e.g., in drug trials on humans. Furthermore, using an animal carrying a disease for testing a substance that also produces effects on the animals health may worsen the effects of the substance being tested, thus causing the animal more suffering than necessary.

To prevent entry and spread of unwanted infectious agents, such as for example bacteria and viruses, a high quality caging system has to be carefully chosen to suit the specific requirements of the user. Over recent years, the use of individually ventilated cage (IVC) rack systems in laboratory animal husbandry has increased. IVC's not only allow for a control of environmental conditions such as humidity and temperature, they also provide each cage with filtered air, which protects the animals in the cages from airborne infectious or other noxious particulate agents present in the environment (Cunliffe-Beamer and Les (1983); Laboratory Animal Science 33, 495; Lipman et al. (1993); Laboratory Animals 27, 134; Clough et al. (1995); Laboratory Animals 29, 139; Lipman (1999); Contemporary Topics 38, 9). In addition, exhaust air from the cages is normally filtered before it is released into the room or into the exhaust air system of the building. Thus, transfer of infectious agents from cage to cage within a given IVC rack or room is minimised (Lipman (1999); Contemporary Topics 38, 9; Gordon et al. (2001); Journal of Allergy and Clinical Immunology 108, 288).

The use of IVC rack systems in laboratory animal husbandry has posed new challenges to effective microbiological monitoring. Generally, microbiological monitoring, in particular of SPF animals, is based on international standards, which have been established by scientific societies in the international laboratory science community. For example, in Europe and in the United States microbiological monitoring standards are established by the FELASA (Federation of European Laboratory Animals Science Association) and by the ACLAM (American College of Laboratory Animal Medicine), respectively. Microbiological monitoring of animals implies a regular analysis for the presence of infectious agents which may be particle-associated or air-bome. Although housing of animals in IVC rack systems reduces the risk of infection from the environment, the routine handling of animals such as changing of bedding and experimental handling of animals, which is routinely carried out in changing stations (e.g. laminar flow hoods), or even in an unprotected environment, still harbours a risk of exposure to environmental conditions and infectious agents and, thus, to infections.

As each individual cage represents its own zone of bio-containment, traditional methods such as exposure of sentinels to airborne infectious agents present in the room air are inappropriate. Also sampling of random animals from the IVC rack is usually not suitable, as it requires the use of large numbers of potentially valuable animals. Thus, the use of sentinels exposed to soiled bedding has been developed (Thigpen et al. (1989); Laboratory Animal Science 39, 324; Nicklas et al. (2002); Laboratory Animals 36, 20; Wilhelm et al. (2002); 8th FELASA Symposium, Laboratory Animal Science-Basis and Strategy for Animal Experimentation. Vol. 1, 23). However, soiled bedding may not detect pathogens not transmitted by the faecal-oral route.

A further development of traditional methods of microbiological monitoring was the introduction of sentinels exposed to exhaust air from the entire rack. In DE 100 26 208, detection of pathogens is carried out by providing at least one cage of sentinel animals with samples of the exhaust air of the rack. Thus, the sentinel animals serve as bio-indicators for the detection of air-borne infectious agents either directly due to the development of a disease or indirectly by developing antibodies or amplifying the pathogens, which may be detected immunologically or microbiologically.

The sentinel-based monitoring system described in DE 100 26 208 has several shortcomings. Firstly, the sentinel animals have to be sensitive and susceptible to the respective pathogens in order to develop an immune response or disease. In addition, a minimum infectious dose of the respective pathogen has to be present and there may, furthermore, be a substantial time lag for the sentinels to develop a disease, amplify the pathogen or develop antibodies. Thus, by the time a pathogen is detected, a large number of affected animals may have been infected and subsequently used in experiments, thus rendering the results obtained questionable. Secondly, for efficient monitoring of different racks at different times a large number of sentinel animals are required. To sacrifice a large number of animals merely for monitoring purposes does not only constitute an enormous financial burden, it is also a less-desirable practice for ethical and animal-welfare reasons.

### SUMMARY OF THE INVENTION

It is an object of the present invention to provide an improved or alternative cage rack system and method for sampling airborne particles from a cage rack system.

This object is attained with the subject-matter as recited in the claims.

The present invention is related to a cage rack system for animals, particularly for laboratory animals. It can be particularly used for IVC cage rack systems. This system can accommodate or comprises a plurality of cages ventilated individually or in groups. At least the majority of the cages comprise at least one air-inlet and at least one air-outlet. The cages can be selected according to the race, size, the number and/or conditions etc. of the animals. The invention further comprises an air guidance system for delivering air to the air-inlet and/or collecting air from the air-outlet with integral or separated conduits. The air guidance system can also comprise any device to draw and/or push air into and/or out of the system and/or to amplify the air flow by devices within the system and/or conduits.

Further, there is provided at least one sampling unit for collecting airborne particles from the air, the sampling unit being adapted to collect the airborne particles by a cyclonic flow path to cause a separation of the particles from the air. The sampling unit can have one or more components and can be arranged for analysing, evaluating, investigating, controlling and/or monitoring the incoming air and/or the outgoing air. The incoming air can be checked in order to have a basis for comparing the respective results with the results from one or more components of the air guidance system analysing, evaluating, controlling and/or checking the outgoing air. In case one or more animals are infected with pathogens these pathogens are delivered to the air either by the air exhaled from the animals or by excretions of the animals or by any other contamination of the air by egesta at least partially contaminating particles in the exhaust air.

The term animals in the context of the present invention refers to non-human animals including laboratory animals suitable for use in experiments, including but not limited to mice, rats, hamsters, gerbils, guinea pigs as well as cats or dogs. Furthermore, in light of the recent concerns with respect to avian influenca viruses, also avians, such as for example chicken, are encompassed by the term animals.

Not all pathogenes are conveyed in the air. However, even pathogenes contained in excrements and/or urine will be conveyed by the air at least partially at some point in time, e.g., when the excrements or urine dry and particles contaminated therewith become airborne due to extensive drying due to frequent air changes in the cages.

Pathogens can comprise viruses, fungi, bacteria, spores, parasites etc.

The sampling unit can further comprise at least one cyclone and at least one collection vessel being disposed downstream of the cyclone. The cyclone can be established by a plurality, such as two or three, of stages in order to minimize its size and/or enhance its effectiveness. Alternatively or additionally a plurality of cyclones connected in series or parallel with differently located ports can be connected to the air guidance system.

The cage rack system can have rails for the insertion of cages in columns and/or lines. The air guidance system can be adapted to deliver and/or collect air jointly from a column or a line of cages. The cages of at least one column or of at least one line can form a group of cages, respectively.

At least one sampling-unit can comprise a device for applying positive and/or negative pressure supporting the cyclonic flow path establishment. Such a device can be an positive or negative pressure pump and/or a ventilator and/or blower etc.

The sampling unit can have a folded cyclonic path with portions of the parts being arranged in series and/or parallel and/or in a concentric arrangement. This can minimize the space needed and can make it possible to gain particles of different specific weight or size.

The sampling unit can have at least an inner cyclonic path and an outer cyclonic path. This is an example for a concentric arrangement. An example of such arrangement is described in US 4 593 429 which is herewith incorporated by reference. A sampling unit can be arranged or positioned at the lower end of the inner cyclonic path.

At least one sampling-unit has a plurality of collection vessels, connected such that a size- and/or weight-dependent rather than rough or exact separation of the collected airborne particles takes place. The collections vessels can be microfuge tubes and/or conical tubes, e.g. with a volume of 15 or 50 ml, (Eppendorf tubes and/or Falcon tubes) which advantageously can be used for further standard evaluations of the particles collected therein. Such evaluation method comprises known techniques.

The sampling unit of the present invention is suitable for the collection and detection of biological materials, particularly biological organisms such as viruses, fungi, bacteria, spores, including their eggs and larvae, if applicable, and other biological pathogens.

Preferred pathogens comprise, but are not limited to Ectromelia virus (causative for mousepox), Hantavirus (causative for hemorrhagic fever with renal syndrome (HFRS)), Kilham rat virus, Lactat dehydrogenase virus, Lymphocytic choriomeningitis virus, Minute virus of mice, Mouse adenovirus FL, Mouse adenovirus K87, Mouse cytomegalovirus, Mouse hepatitis virus, Mouse K virus, Mouse parvovirus, Mouse polyoma virus, Mouse rotavirus (EDIM), Mouse thymic virus, Murine norovirus, Pneumonia virus of mice, Polyoma virus, Rat minute virus, Rat parvovirus, Reovirus type 3, Reovirus type 3t, Sendai virus, Sialodacryoadenitis/Rat corona virus, Simian virus-5 (SV-5), Theiler's murine encephalomyelitis virus, Toolan's H-1 virus, Bortedella bronchiseptica, Citrobacter freundii, Citrobacter rodentium, Clostridium piliforme (Tyzzer's disease), Corynebacterium kutscheri, Helicobacter spp., Klebsiella pneumoniae, Leptospira spp., Mycoplasma spp., Pasteurellaceae, Pasteurellaceae, Pasteurellaceae, Proteus spp., Pseudomonas aeruginosa, Salmonella spp., Staphylococcus spp., Streptobacillus moniliformis, Streptococci, Arthropods, Aspiculuris sp., Coccidien, Encephalitozoon cuniculi, Giardia spp., Protozoan flagellates, Spironucleus muris, Syphacia sp. or Trichomonas sp.. These pathogens are well know to the skilled person.

Further within the scope of the present invention is the collection and detection of biological molecules such as polypeptides, nucleic acids, polysaccharides, lipids, hormones, chemicals or trace elements.

Material obtained with the sampling unit is optionally further processed. For example, cells may be lysed, and the cell lysate may be separated and analyzed for characteristic components such as proteins or DNA.

The term "detection of biological material" refers to the identification, characterization, analysis and/or quantification of the biological material. Detection may be accomplished by methods well known to the person skilled in the art, for example, via amplification of pathogen-specific nucleic acid sequences; culture of pathogens on appropriate growth media, followed by isolation and either (time-consuming) biochemical or histological assays; mass spectrometer-based detection of pathogen-specific components, such as MALDI-TOF; use of DNA hybridization techniques, such as for example Northern or Southern blot assays or hybridisation on DNA arrays as well as assays based on protein detection including but not limited to Ion Exchange Chromatography, Gel Filtration Chromatography, Affinity Chromatography, High Pressure Liquid Chromatography (HPLC) or immunoassays, such as enzyme-linked immunosorbent assays (ELISA), Western blot analysis or Immunoprecipitation. For example, if a gene is to be detected, a hybridization assay may be used in the detector; if a toxin is to be detected, mass spectrometry may be the best choice; if a whole organism is to be detected, an immunoassay utilizing an antibody with specificity toward that organism may be selected.

Furthermore, a biosensor may be employed to detect the biological material. Biosensors comprise an analyte or immobilised reagent integrated with an electronic transducer. The chemical reaction that occurs between the biological material and the reagent triggers an electrical or optical response in the transducer. This response is then amplified and relayed to some annunciation device. In theory a large number of these tiny biosensors would form an array capable of detecting any one of the known viruses, bacteria or parasites and would provide rapid identification as well as digital output to some controller or computer. Microbial biosensors would be designed with analytes that have a specificity for microbiological components such as surface components or specific metabolites. The mechanisms by which the microbes are detected could include electrochemical (amperometric, conductimetric or potentiometric) or electromagnetic (optical or mass) means.

In a preferred embodiment, pathogens are identified via amplification of pathogen-specific nucleic acid sequences. Methods of amplification of nucleic acid sequences include, for example, RT-PCR and its various modifications such as qRT-PCR (also referred to as Real Time RT-PCR). PCR is well known in the art and is employed to make large numbers of copies of a target sequence. This is done on an automated cycler device, which can heat and cool containers with the reaction mixture in a very short time. The PCR, generally, consists of many repetitions of a cycle which consists of: (a) a denaturing step, which melts both strands of a DNA molecule and terminates all previous enzymatic reactions; (b) an annealing step, which is aimed at allowing the primers to anneal specifically to the melted strands of the DNA molecule; and (c) an extension step, which elongates the annealed primers by using the information provided by the template strand. Generally, PCR can be performed for example in a 50 µl reaction mixture containing 5 µl of 10 x PCR buffer with 1.5 mM MgCl2, 200 µM of each deoxynucleoside triphosphate, 0.5 µl of each primer (10 µM), about 10 to 100ng of template DNA and 1 to 2.5 units of Taq Polymerase. The primers for amplification may be labelled or be unlabelled. DNA amplification can be performed, e.g., with a model 2400 thermal cycler (Applied Biosystems, Foster City, CA): 2 min at 94°C, followed by 30 to 40 cycles consisting of annealing (e. g. 30 s at 50°C), extension (e. g. 1 min at 72°C, depending on the length of DNA template and the enzyme used), denaturing (e. g. 10 s at 94°C) and a final annealing step at 55°C for 1 min as well as a final extension step at 72°C for 5 min. Suitable polymerases for use with a DNA template include, for example, E. coli DNA polymerase I or its Klenow fragment, T4 DNA polymerase, Tth polymerase, Taq polymerase, a heat-stable DNA polymerase isolated from Thermus aquaticus Vent, Amplitaq, Pfu and KOD, some of which may exhibit proof-reading function and/or different temperature optima. However, the person skilled in the art knows how to optimize PCR conditions for the amplification of specific nucleic acid molecules with primers of different length and/or composition or to scale down or increase the volume of the reaction mix. The "reverse transcriptase polymerase chain reaction" (RT-PCR) is used when the nucleic acid to be amplified consists of RNA, such as in cases where RNA-viruses are to be detected. The term "reverse transcriptase" refers to an enzyme that catalyzes the polymerization of deoxyribonucleoside triphosphates to form primer extension products that are complementary to a ribonucleic acid template.The enzyme initiates synthesis at the 3'-end of the primer and proceeds toward the 5'-end of the template until synthesis terminates. Examples of suitable polymerizing agents that convert the RNA target sequence into a complementary, copy-DNA (cDNA) sequence are avian myeloblastosis virus reverse transcriptase and Thermus thermophilus DNA polymerase, a thermostable DNA polymerase with reverse transcriptase activity marketed by Perkin Elmer. Typically, the genomic RNA/cDNA duplex template is heat denatured during the first denaturation step after the initial reverse transcription step leaving the DNA strand available as an amplification template. High-temperature RT provides greater primer specificity and improved efficiency. U.S. patent application Serial No. 07/746, 121, filed Aug. 15, 1991, describes a "homogeneous RT-PCR" in which the same primers and polymerase suffice for both the reverse transcription and the PCR amplification steps, and the reaction conditions are optimised so that both reactions occur without a change of reagents. Thermus thermophilus DNA polymerase, a thermostable DNA polymerase that can function as a reverse transcriptase, can be used for all primer extension steps, regardless of template. Both processes can be done without having to open the tube to change or add reagents; only the temperature profile is adjusted between the first cycle (RNA template) and the rest of the amplification cycles (DNA template). The RT Reaction can be performed, for example, in a 20µl reaction mix containing: 4 µl of 5x AMV-RT buffer, 2 µl of Oligo dT (100 µg/ml), 2µl of 10 mM dNTPs, 1 µl total RNA, 10 Units of AMV reverse transcriptase, and H₂O to 20µl final volume. The reaction may be, for example, performed by using the following conditions: The reaction is held at 70 C° for 15 minutes to allow for reverse transcription. The reaction temperature is then raised to 95 C° for 1 minute to denature the RNA-cDNA duplex. Next, the reaction temperature undergoes two cycles of 95°C for 15 seconds and 60 C° for 20 seconds followed by 38 cycles of 90 C° for 15 seconds and 60 C° for 20 seconds. Finally, the reaction temperature is held at 60 C° for 4 minutes for the final extension step, cooled to 15 C°, and held at that temperature until further processing of the amplified sample. Any of the above mentioned Reaction conditions of different PCRs may be scaled up according to the needs of the particular case.

In a most preferred embodiment, pathogens are detected using Virus PCR Assay Panels, such as those described in Blank *et al.* (Blank *et al.* (2004); Lab Anim (NY) 33:26).

Another aspect of the invention is directed to a cage rack system for animals as described above and alternatively and/or additionally comprising a sampling unit which is replaceably attachable at and/or insertable into the conduit. This aspect is particularly aiming at a preferably modular possibility to detect, analyse, evaluate, control and/or monitor the conditions of a certain cage or common group of cages according to the needs which may be subject to change depending on the specific animals contained in the cages at any given point in time.

The conduit can comprise a flange and/or access for the direct attachment of the sampling unit. The sampling unit can be attachable at and/or into the flange and/or access in an air tight manner, preferably by a snap fit, a coupling ring or a bayonet coupling. Any other attaching means known can also be used.

The conduit can have a cylinder which is connected to the flange. The connection can be realized by any type, such as a merging section, an integral or separate connection of the components. Any kind of welding seam, brazing, glue, force, positive, friction connection etc. can be used. The materials used for the air guidance system can be any material which is suitable, such as suitable plastics, ceramics and/or metal. The cylinder preferably comprises a variable volume. This has the preferred advantage that turbulances, a swirl etc., can be controlled and or adapted to the needs depending on the conditions within the air guidance system. A plunger can be slidably arranged in the cylinder in order to vary the volume of the cylinder. The plunger can have a sampling surface for collecting particles. This surface can have an absorbent and/or any other structure which is suitable to bind and/or collect the particles of interest. The sampling surface can be replacably attached to the plunger and can be made of certain fibres, paper etc. which is generally known in the art. The sampling surface may be attached to the plunger by any known positive, friction and/or elastic locking and/or a Velcro type connection. This ensures an quick and easy replacement of the sampling surface once a used sampling surface has to be replaced. The already used sampling surface can then be easily and quickly further handled for evaluation purposes and may be already shaped or adapted to be immediately inserted into an already known evaluation device.

A means for providing turbulence to increase sampling efficiency can be provided upstream the cylinder. This can be any kind of known deflection shield, pins etc. known in the field of aerodynamics.

The conduit can comprise a pocket, window or any other means for the direct insertion of the sampling unit. In the unused situation a stopper, cover or lid can be provided that closes the pocket or window in an air tight manner. The cover or lid can be of standard format so as to also fit into other pockets or windows. It can be made of the same or different material as the conduits. It may be in-transparent, opaque or transparent. The sampling unit can be replaceably insertable into the pocket in an air tight manner, preferably by a snap fit. Any other type of replacable connection known in the art can also be used.

The sampling unit is dimensioned to fill out at least a part of the entire inner cross-section of the conduit, preferably 20-100%, more preferably 30-70%, even more preferably 40-60%. Even in the case it doesn't fill out the entire cross-section of the conduit it may be sufficient to cover only part thereof in order to collect some of the airborne particles to allow their analysis. In this case it also contributes to a turbulent flow so that more particles will get in touch with another sampling unit located downstream. Also losses in the conduits will be minimized.

At least one flange, access, window and/or pocket is provided downstream of the air outlet of each cage or each group of cages. As mentioned before, they can also be provided downstream of any further cage or group of cages. This allows for a modular system allowing a suitable configuration for any needs.

The rack can have rails for the insertion of cages in columns and lines in a generally known manner. The air guidance system can comprises at least a set of first conduits which are each adapted to deliver and/or collect air jointly to and/or from a column or a line of cages and at least one second conduit which is adapted to deliver and/or collect air jointly to and/or from each of the set of first conduits. The sampling unit(s) can be provided in each of the first conduits and/or in any of the second conduit(s).

It is a further aspect of the present invention to combine any two or more of the afore and/or below cage rack systems. E.g., a cage rack system can have a cyclone and the insertable sampling units as described before and/or below.

The system can also have monitoring means for simultaneously or consecutively analysing and/or monitoring the air and/or exhaust air in response to the sampling unit.

The sampling unit can comprise a filter means, a sedimentation means, a gravity means, a centrifugal means, a deflexion means, an inertia means, an electrostatic means, a diffusion means or an analytic assay means or any combination thereof.

The present invention is also directed to a method for sampling, analysing, and/r monitoring airborne particles from a cage rack system, particularly according to any of the afore described kind. In a step the method comprises ventilating a plurality of cages individually or in groups, at least the majority of the cages via at least one air-inlet and at least one air-outlet. A further step is to deliver air to the air-inlet and/or collecting air from the air-outlet by an air guidance system. The airborne particles are then collected from the air by at least one sampling unit. The sampling unit has a cyclonic flow path to collect the airborne particles to cause a separation of the particles from the air.

Alternatively or additionally the sampling unit can be replaceably attached at or inserted into the conduit.

The present invention also embraces the use of a cage rack system and/or a method for sampling airborne particles from a cage rack system according to any of the respective preceding and below aspects and embodiments for detecting pathogens in the cages such as viruses, fungi, bacteria, spores and/or parasites.

The present invention can provide the advantage to provide a cage rack system and a method for sampling airborne particles from a cage rack system, both of which being able to produce reproducible, standardized conditions for animals, particularly for laboratory animals. The conditions can be analyzed, evaluated, controlled and/or monitored in order to make sure that no unwanted or inexplicable modification of the cage environment takes place.

The present invention can have the further advantage that airborne particles can be separated easily in an effective manner and can even be separated according to weight, size and/or time period of its presence. The separation of particles can thus take place in an effective manner with minimum space.

The present invention can be arranged in a modular manner so that single cages or groups of cages can be evaluated, controlled and/or monitored etc. with ease. This is of particular use in case a group of animals having something in common, such as their connection to a certain experiment, can be evaluated in common and separately of the other animals being hosted in the same rack.

### BRIEF DESCRIPTION OF THE DRAWING

For a better understanding of the invention the following figures show or exemplify preferred embodiments:
- Fig. 1A-C: a frontal, a lateral and a top view, respectively, onto a preferred embodiment of a cage rack system according to the present invention;
- Fig. 2: a flow chart exemplifying another preferred principle arrangement of components in a cage rack system according to the present invention;
- Fig. 3: a preferred embodiment of a sampling unit in a cage rack system according to the present invention;
- Fig. 4: a principle sketch of a preferred embodiment of a cyclone in a cage rack system according to the present invention;
- Fig. 5: a principle sketch of a further preferred embodiment of sampling unit in a cage rack system according to the present invention;
- Fig. 6: a principle sketch of a further preferred embodiment of sampling unit with a monitoring means in a cage rack system according to the present invention;
- Fig. 7: a schematic view onto a preferred embodiment of a cage rack system according to the present invention, particularly with different sampling points for one or more sampling units;
- Fig. 8: a photograph of a prototype of a preferred embodiment of a sampling unit according to the present invention;
- Fig. 9: a further photograph of the prototype of the sampling unit according to Fig. 8; and
- Fig. 10A,B: a schematic cross-section through a conduit with an access and with and without a preferred embodiment of a sampling unit, respectively.

### DETAILLED DESCRIPTION OF THE DRAWING

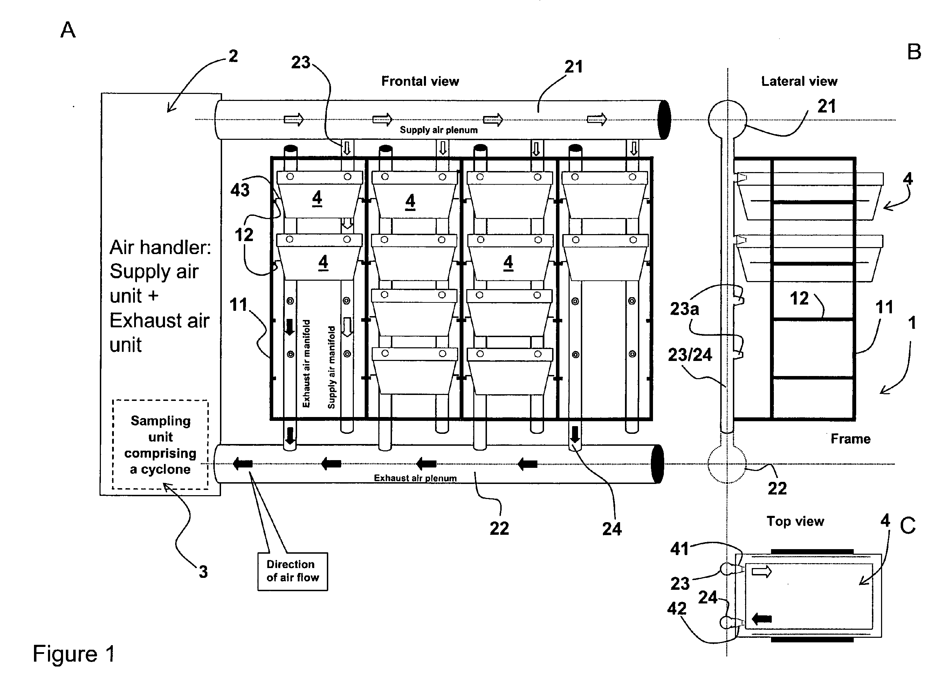

Fig 1A shows a frontal view onto a cage rack system 1 according to the present invention. Cages 4 can be positioned in the cage rack system 1 with an arrangement similar to a matrix. That is, the cages 4 can be arranged in columns and lines so that in an average cage rack system 1, a relatively large number of cages 4 can be placed with a minimum loss of space and nevertheless establishing a comfortable space for the animals.

Vertically oriented rails 11 support horizontally oriented rails 12 in a known manner. Into or onto the horizontally oriented rails 12 the cages 4 can be introduced like drawers. The cages 4 comprise respective cage rails 43. Any other suitable means for positioning the cages 4 in the cage rack system 1 can also be used. The presence and the correct position of the drawers 4 can be detected by respective mechanical, electric and/or electronic indicators or switches (not shown).

In the back of the cage rack system 1 components, such as a first set of conduits 23, 24 can be arranged to deliver and/or collect air to and from the cages 4. In the embodiment shown, common first sets of conduit are provided for each column of cages 4. In the embodiment shown a delivering conduit 23 and a collecting conduit 24 is provided for each column of cages 4.

A second set of conduits 21, 22 can be provided for delivering and collecting the air to and from the first sets of conduits 23, 24. In the embodiment shown in Fig. 1A supplying conduit 21 is arranged above the first set of each conduits 23, 24, and an exhaust conduit 22 is arranged below the first set of each conduits 23, 24 in each cage rack system 1. From Fig. 1A it is apparent that in this embodiment the delivering conduits 23 are connected to the supplying conduits 21 the bottom ends of which are closed. The collecting conduits 24 have closed top ends whilst their bottom ends merge with or are connected to the exhaust conduits 22.

An air guidance system 2 controls and may also monitor the supply and exhaust of air in a generally known manner. At least one pump, ventilator, blower etc. (not shown) may provide positive pressure and/or negative pressure in order to push and/or draw the air for the ventilation to and away from the cages 4. Instead of the pump any other suitable means can be used for the purpose of ventilation, such positive pressure tanks or already installed positive pressure delivery pipes.

The air guidance system 2 can also comprise an electronic control unit with a display and any kind of inputting device, such as a keyboard, to enable a user to manipulate and check the status of the air guidance system 2. Software for providing already predetermined programs for running, controlling and/or monitoring the air guidance system 2 can further be provided.

The incoming air should be filtered in order to reduce the risk of contaminating the air supplied to the cages. This can be done with HEPA filters in a generally known manner. Further means for sterilizing the incoming air can also be provided such as biological, chemical and/or physical treatment devices. E.g. the incoming air can be treated with heat, steam, biologically and/or chemically active reagents and/or radiation reducing the number of contaminants being able to influence or harm the health status of the animals.

Once the air has entered the air guidance system 2 it is delivered to the supplying conduit 21 with a sufficient pressure in order to offer sufficient air for the cages 4 although the numbers of cages 4 may differ drastically. The cage rack system 1 may be filled with the maximum number of cages or with only a fraction thereof. The air guidance system 2 can be adapted to deliver sufficient air for the case when the cage rack system 1 is fully occupied with cages 4 so that also in cases with a reduced number of cages 4 sufficient air will be provided. The air guidance system 2 may also deliver air upon having determined the number of cages 4 actually introduced into the system. In the latter case further means (not shown) can be installed in order to determine the number of cages 4 in the system and to deliver this information to the air guidance system 2. E.g., this could be realized by any kind of detectors, such as sensors operating with switches and/or light etc. The information with the numbers of actual cages could then be processed in a control device (not shown) in order to either control or regulate the air pressure.

The air from the supply conduit 21 is then branched off into the different delivering conduits 23 for each cage 4, a group of cages 4 or, as shown in Fig. 1A, each column of cages 4.

The air then enters each cage and the pressure may be reduced to a level appropriate and comfortable for the animals in the cages. This can be done with a reduction valve (not shown in Fig. 1A). This valve can either be provided in or at the delivering conduit in front of each cage 4 or in each cage 4. The latter possibility would have the advantage that each cage 4 could determine the air pressure according to the kind, number, condition etc. of the animal in the respective cage 4. Such valves in the delivering conduits 23 or in the cages 4 could be arranged in a replaceable manner.

After having passed the cages 4 in a generally known manner, the air is drawn or pushed into the collecting conduit 24. Again, a collecting conduit 24 can be provided for each cage 4, a group of cages 4 or a column of cages 4, as shown in Fig. 1A. The air is then further collected in the exhaust conduit 22 and further conveyed or lead to the air guidance system 2.

One aspect of the present invention is already shown in Fig. 1A, namely that a sampling unit 3 is provided to collect airborne particles from the exhaust air. This sampling unit 3 can be placed in or at the air guidance system 2, as shown in Fig. 1A, and alternatively or additionally downstream of each or individually selected cages 4 or each group of cages 4, such as downstream of each or individually selected columns of cages 4.

According to another aspect of the invention, the sampling unit 3 comprises at least one cyclone 30 and at least one collection vessel 35 being disposed downstream of the cyclone 30. The cyclone 30 has already been specified above and will be further described also below.

According to Fig. 1B, the cage rack system 1 and the cages 4 are shown from the left side in Fig. 1A. It can be derived how the vertical and horizontal rails 11 and 12, respectively, can hold the cages 4. It is particularly shown that the horizontal rails 12 engage a respective engaging device attached or integrally formed with each cage 4.

Fig. 1B further shows the supply conduit 21 and the exhaust conduit 22 in cross section, at the top and the bottom of this figure, respectively. A delivering conduit 23 then branches of the supply conduit 21 and delivers air to each cage 4. A socket 23a can be attached to the delivering conduit 23 which engages a corresponding air-inlet 41 fixed to the respective cage 4. As mentioned above, a reduction valve can be also provided which can be opened and activated by the connection of the cage 4 with the socket 23a only. That is, when no cage 4 is inserted into a respective location of the cage rack system 1, then the socket 23a is closed.

Behind the delivering conduit 23 there is also shown the collecting conduit 24 for drawing or exiting the air from the cages 4. The arrangement and mechanism between sockets and a corresponding air-outlet 42 provided at or in the cage 4 can be the same as described before.

Fig. 1C shows a top view onto one of the cages 4 placed into the cage rack system 1 with the connections to the delivering conduit 23 and the collecting conduit 24 being attached to the air-inlet 41 and the air-outlet 42, respectively.

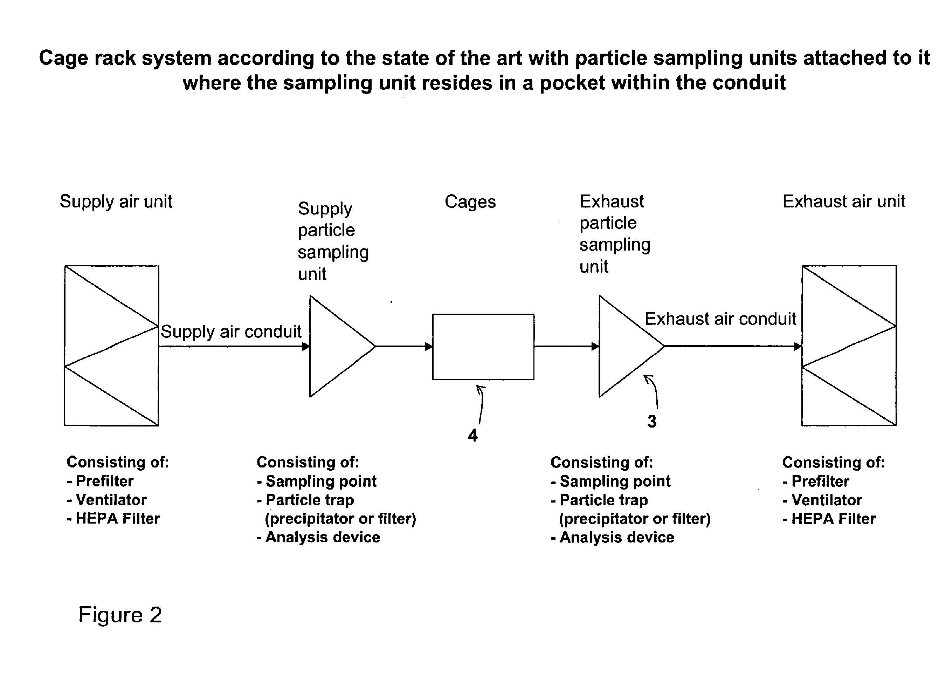

Fig. 2 shows the arrangement of the components as described before. In general, it shows an IVC cage rack system modified according to one aspect of the present invention. The air guidance system 2 can be provided with a supply air unit drawing ambient room air or air from the outer environment and comprising the elements described before, such as at least one pre-filter, at least one ventilator and/or blower and/or at least one HEPA filter (HEPA = high efficiency particle absorber). Downstream of the air guidance system a further sampling unit may be provided in order to control or monitor the incoming air as well. The incoming air is then conveyed to the cages 4. The already before mentioned sampling unit 3 is then arranged downstream of the cages or each cage 4.

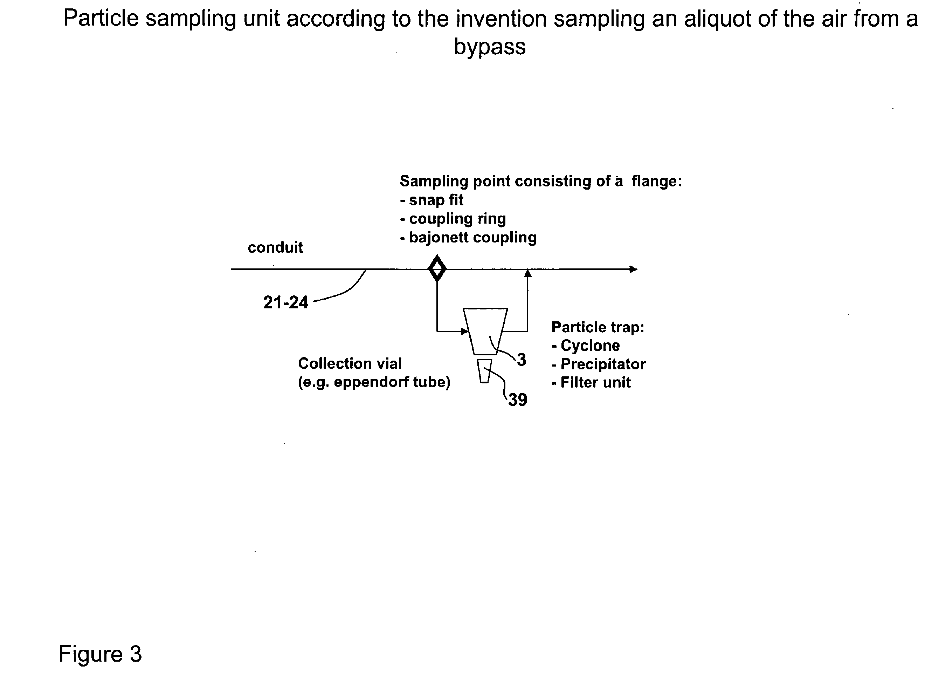

Fig. 3 exemplifies any of conduits 21-24 having a sampling point at any of the locations mentioned before and/or above, e.g. behind each cage or a group of cages or all of the cages (not shown). At the sampling point some or all of the particles can be collected by either drawing air through the sampling unit or making the air to touch the sampling unit 3 and depositing particles contained therein onto or into the sampling unit 3. Moreover, the air or a part thereof can be diverted from the air flow in the conduit 21-24 and, after some or essentially all of the particles are collected, can be lead back to the conduit. The sampling unit can be a cyclone, a filter and/or any filter means, a sedimentation means, a gravity means, a centrifugal means, a deflexion means, an inertia means, an electrostatic means, a diffusion means and/or an analytic assay means.

In Fig. 3 also a collection vessel 39 can be placed in order to collect the particles for further examination.

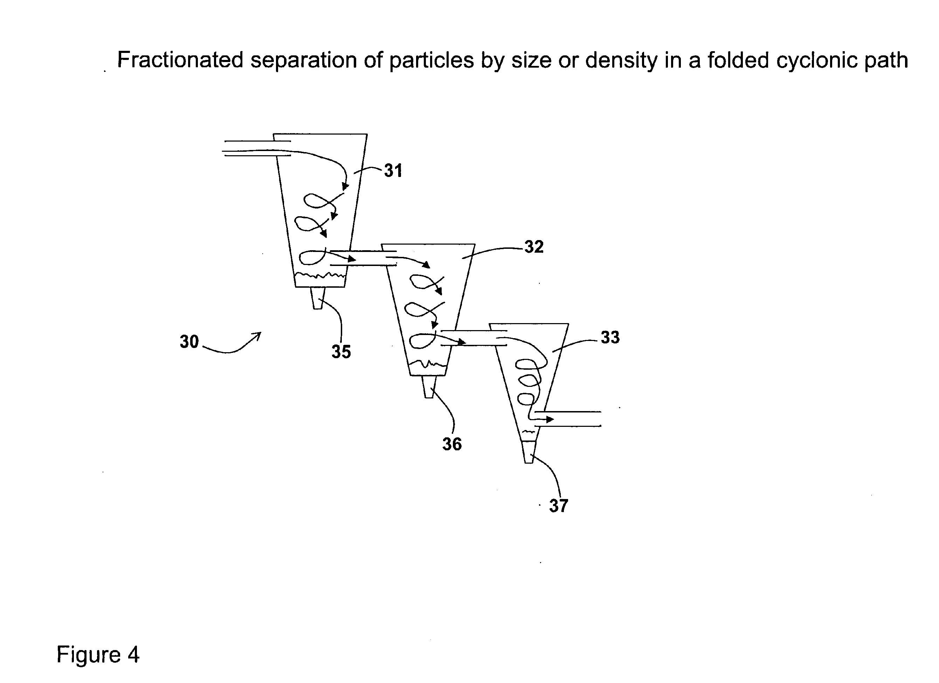

Fig. 4 shows an embodiment of a cyclone having a folded cyclonic path 31-33 consisting of a plurality (here three) sections 31-33. In the embodiment shown these sections are located serially. They may also be placed in parallel or both, namely serially in part and parallel in part. In another embodiment the sections of the cyclonic path can be folded concentrically. In the embodiment shown, a pipe close to the bottom of each section 31-33 conveys the air and the remaining particles to the next section 32, 33 or back to a conduit or to the atmosphere.

At the bottom of each section 31-33 a corresponding collection vessel 35-37, respectively, can be place which collects the or at least some of the particles being separated by the respective section 31-33.

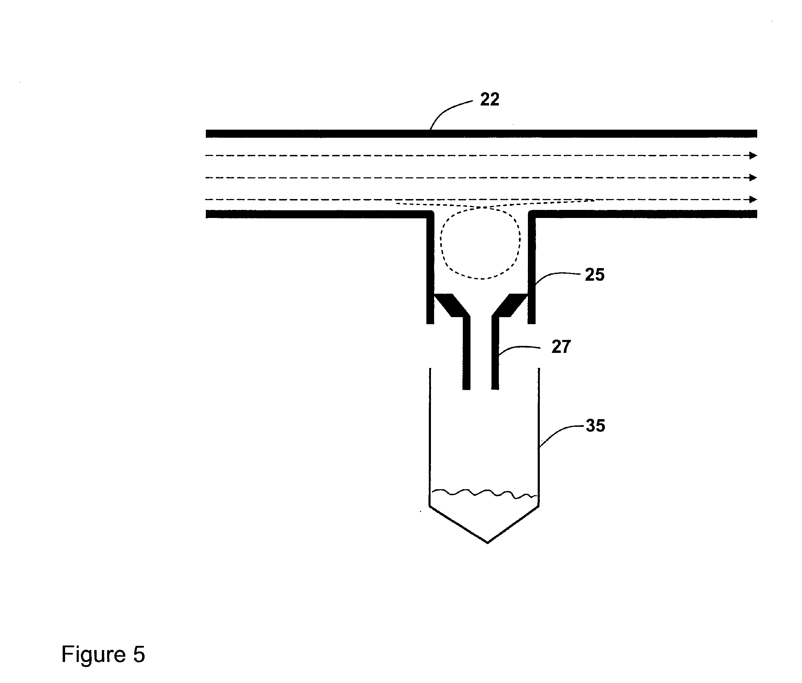

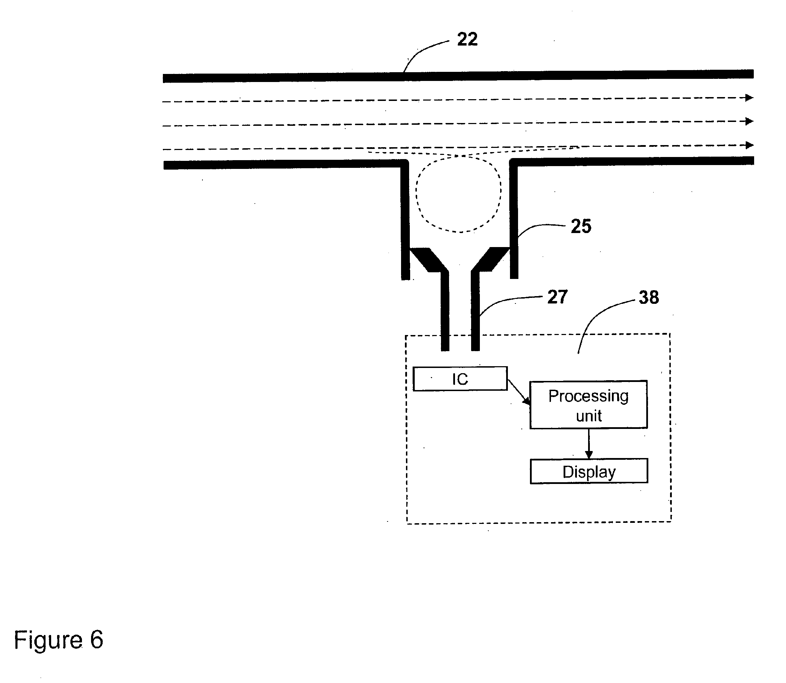

According to Figs 5 and 6 a flange 25 is shown which branches off a conduit, here the collecting conduit 22. A turbulence of the air flow within the flange 25 is further shown. The turbulence is alone created by the additional volume radially located to the collecting conduit 22. The turbulence can be controlled actively or passively by the volume of the flange. Any particles can be extracted by a separator which can be a funnel-shaped device 27 as shown in Fig. 5. The particles can then be collected by the vessel 35 as shown. However, any additional or alternative means can be provided, e.g. to analyse or monitor the particles either consecutively or simultaneously. An example is shown in Fig. 6 where a monitoring means 38 is shown which can comprise an assay or IC with a processing unit and a display or any other or additional means to inform or warn an operator.

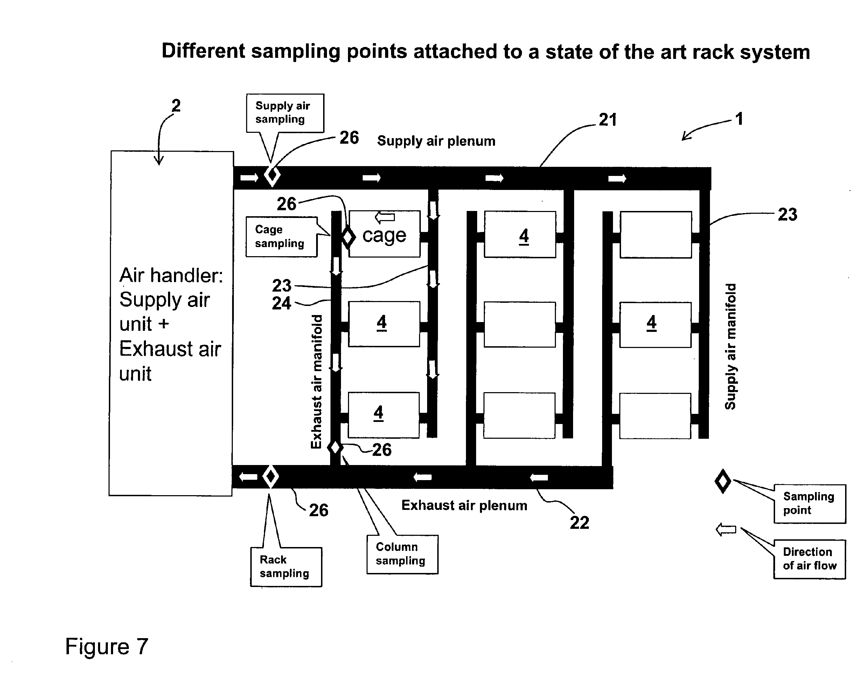

Fig. 7 exemplifies locations 26 for or points of sampling the air by one or more sampling units (not shown). E.g., the air can be sampled in the supply air conduit 21 upstream of the cages 4 in order to analyze or monitor the quality of the incoming air and to alternatively or additionally obtain a reference value. The air can additionally or alternatively be sampled downstream of the cages 4 in order to have a picture about any contamination or pathogens in the entire cage rack system 1. In the left column downstream of the upper most cage another sampling point 26 can be provided in order to analyze or monitor the conditions in the particular cage 4 as there may be held laboratory animals of specific relevance. Such a sampling point may be located behind each other cage 4 or just a selected group thereof, if desired. The cage rack system 1 can have the modular structure to allow the insertion of such sampling units wherever desired. Another sampling point is shown at the end of the collecting conduit 24 before it merges with the exhaust conduit 22. This would enable to monitor a group of cages 4, more specifically the left column of cages 4 in the cage rack system 1. It goes without saying that also at the end of the other collecting conduits 24 flanges 25, points of access 26, pockets, windows etc. can be provided in order to be also able to analyze or monitor the remaining columns of cages 4. Instead of the embodiment shown, the delivering and collecting conduits 23, 24 can also be oriented horizontally. As is further depicted in Fig. 7, a supply air manifold could be provided in order to connect another cage rack system, if desired (not shown).

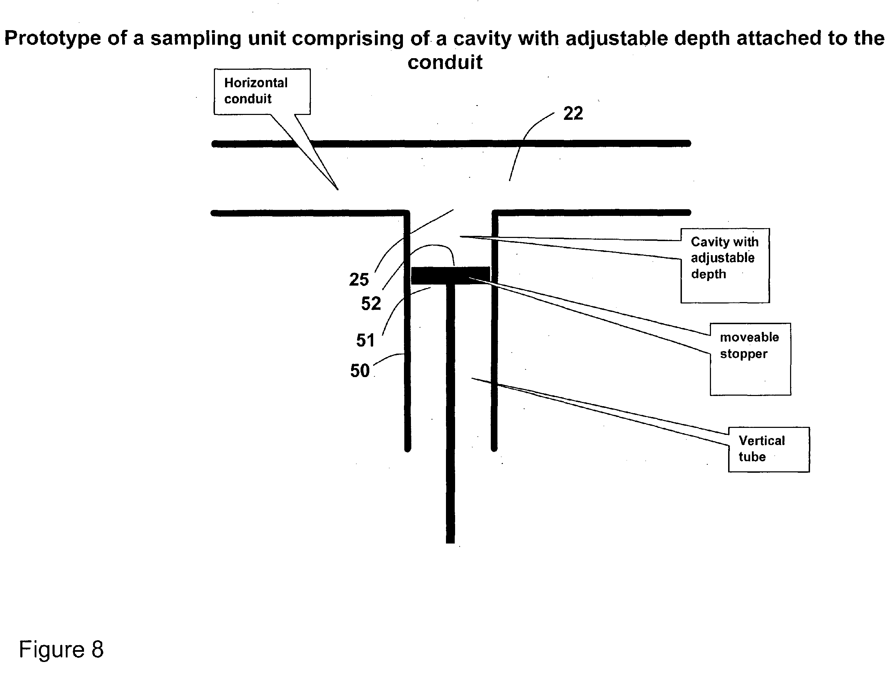

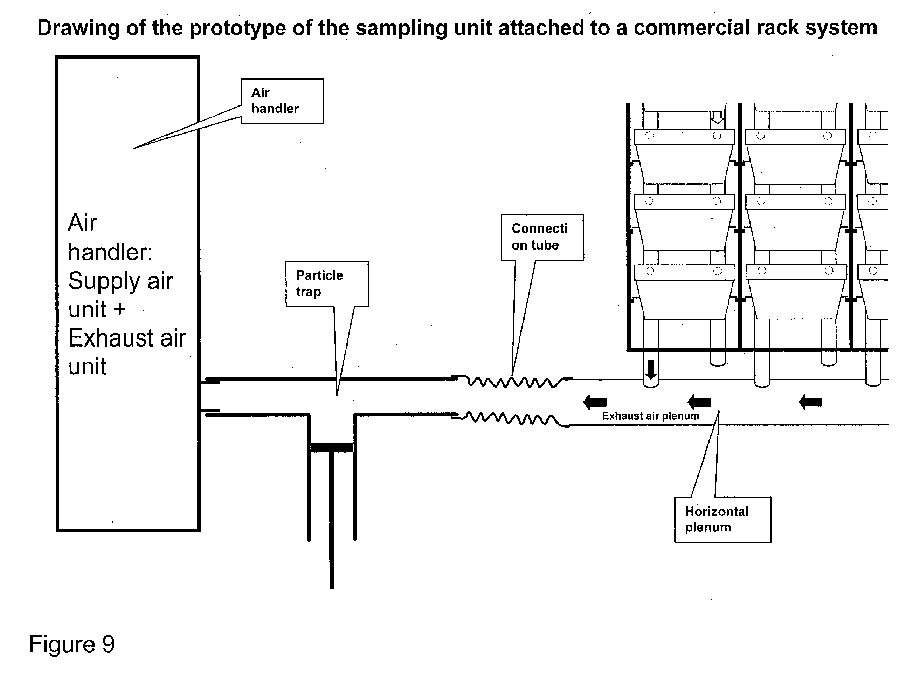

Figs 8 and 9 show an example of a sampling unit arranged with a flange radially away from a collecting conduit 22. It can also be arranged with or in any other conduit of the air guidance system. These figures show the flange 25 with a cylinder 50 attached to it so as to branch off particles within the airflow from the conduit 22. The volume or extra space of the cylinder 50 and the flange 25 can be controlled by a device, such as a plunger 51. The plunger can be either moved more inwardly or outwardly so as to minimize or increase the dead volume and to influence the turbulence created in the region of the flange 25. Further deflectors could also be arranged upstream within the conduit 22, as already mentioned before. The plunger can have a sampling surface 52 which is particularly adapted to collect the particles from the air. In Fig. 9 an example is shown how such sampling unit can be integrated into the air guidance system.

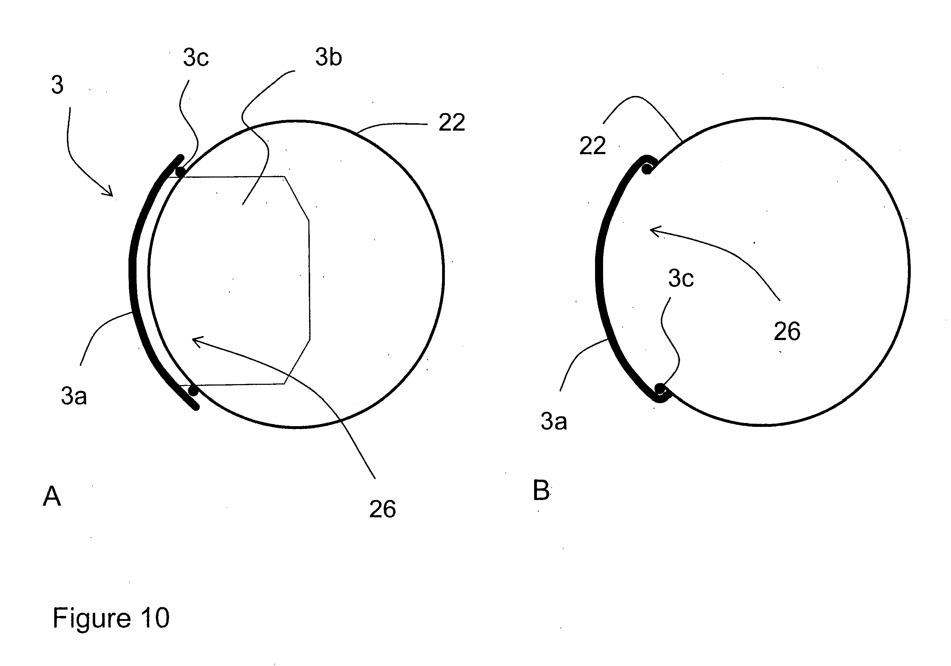

Fig. 10A and B exemplify a cross-section through the conduit 22 with a window or an access 26 provided in the conduit 22. As an example the exhaust conduit 22 is shown but it could be also any other conduit as described before. In Fig. 10A the sampling unit 3 can be provided with a lid 3a basically corresponding to the shape of the conduit 22. Attached to the lid 3a is a filter 3b for collecting the particles from the air flowing through the conduit 22 at least in part. The filter 3b can extend over a portion of the inner cross-section of the conduit 22 only or can also extend over the entire inner cross-section thereof. A sealing (not shown) can be attached to the lid 3a or the conduit 22 in order to seal the conduit 22 so that no ambient air is drawn in or exhaust air can get out. The sampling unit 3 can be attached to the conduit 22 by any known means, such as a snap fit between the conduit 22 and the sampling unit 3, a positively locking assembly, e.g. with a latch or a band around the conduit, a frictional or elastic locking arrangement etc. In the embodiment shown a rim 3c is provided which can form the sealing and/or can assist in the proper and definite attachment of the lid 3a to the conduit 22. In case no sampling unit 3 is inserted a lid 3a without any further elements can be provided in order to close the conduit 22, see Fig. 10B.

The invention also covers all further features shown in the figures individually although they may not have been described in the afore description. The present invention covers further embodiments with any combination of features from different embodiments described above. Any and/or language used in the present application is intended to embrace alternatives individually as well as combinations.

The present invention also covers the exact terms, features, values and ranges etc. in case these terms, features, values and ranges etc. are used in conjunction with terms such as about, around, generally, substantially, essentially, at least etc. (i.e., "about 3" shall also cover exactly 3 or "essentially radial" shall also cover exactly radial).

## Claims

1. A cage rack system (1) for animals comprising
(a) means for accomodating a plurality of cages (4) ventilated individually or in groups, at least the majority of the cages (4) comprising at least one air-inlet (41) and at least one air-outlet (42),
(b) an air guidance system (2) used for delivering air to the air-inlet (41) and/or collecting air from the air-outlet (42),
(c) at least one sampling unit (3) used for collecting airborne particles from the air,
wherein
(d) the sampling unit (3) is adapted to collect the airborne particles by a cyclonic flow path to cause a separation of the particles from the air.

2. A cage rack system (1) according to claim 2, wherein the sampling unit (3) comprises at least one cyclone (30) and at least one collection vessel (35-39) being disposed downstream of the cyclone (30).

3. A cage rack system (1) according to any of the preceding claims, wherein the rack has rails (11,12) for the insertion of cages (4) in columns and/or lines, the air guidance system (2) is adapted to deliver and/or collect air jointly from a column or a line of cages (4), and wherein the cages (4) of at least one column or of at least one line form a group of cages (4), respectively.

4. The cage rack system according to any of the preceding claims, wherein at least one sampling-unit (3) comprises a means for applying positive and/or negative pressure supporting the cyclonic flow path establishment.

5. The cage rack system according to any of any of the preceding claims,
wherein the sampling unit (3) comprises a folded cyclonic path (31-33).

6. The cage rack system according to any of the preceding claims, wherein the sampling unit (3) comprises at least an inner cyclonic path and an outer cyclonic path, a sampling unit (3) being preferably provided at the lower end of the inner cyclonic path.

7. The cage rack system according to any of the preceding claims, wherein at least one sampling-unit has a plurality of collection vessels (35-37), connected such that a size and/or weight dependent separation of the collected airborne particles takes place.

8. The cage rack system according to any of claims 2 to 7, wherein the collections vessels (35-37) are microfuge tubes or conical tubes of e.g. 1.5 to 50 ml

9. A cage rack system for animals comprising:
(a) means (11,12) for accommodating a plurality of cages (4) ventilated individually or in groups, at least the majority of the cages (4) comprising at least one air-inlet (41) and at least one air-outlet (42),
(b) an air guidance system (2) used for delivering air to the air-inlet (41) and/or collecting air from the air-outlet (42), the air guidance system comprising at least one conduit (21-24),
(c) at least one sampling unit (3) used for collecting airborne particles from the air,
wherein
(d) the sampling unit (3) is replaceably attachable at and/or insertable into the conduit (21-24).

10. A cage rack system (1) according to claim 9, wherein the conduit (21-24) comprises a flange (25) and/or access (26) for the direct attachment of the sampling unit (3) and the sampling unit (3) is attachable at the flange (25) or access (26) in an air tight manner, preferably by a snap fit, a coupling ring or a bayonet coupling.

11. A cage rack system (1) according to claim 9 or 10, wherein the conduit (21-24) comprises a cylinder (50) which is connected to the flange (25), the cylinder (50) preferably comprising a variable volume.

12. A cage rack system (1) according to claim 11, wherein a plunger (51) is slidably arranged in the cylinder (50) in order to vary the volume of the cylinder (50), the plunger (51) preferably having a sampling surface (52) for collecting particles.

13. A cage rack system (1) according to claim 11 or 12, wherein a means for providing turbulence is provided upstream the cylinder (50).

14. A cage rack system (1) according to any one of claims 9 to 13, wherein the conduit (21-24) comprises a window or pocket (26) for the direct insertion of the sampling unit (3) and the sampling unit (3) is replaceably insertable into the pocket (26) in an air tight manner, preferably by a snap fit.

15. A cage rack system (1) according to any one of claims 9 to 14, wherein the sampling unit (3) is dimensioned to fill out at least a part of the entire inner cross-section of the conduit (21-24), preferably 20-100%, more preferably 30-70%, even more preferably 40-60%.

16. A cage rack system according to any of claims 9-15, wherein at least one flange (25), access and/or pocket (26) is provided downstream of the air-outlet (42) of each cage (4) or each group of cages (4).

17. A cage rack system (1) according to any of claims 10-16, wherein the flange (25), access and/or pocket (26) is closed with a stopper, cover and/or lid in case no sampling unit (3) is provided.

18. A cage rack system (1) according to any of the preceding claims, wherein the rack (1) has rails (11,12) for the insertion of cages (4) in columns and lines, the air guidance system (2) comprises at least a set of first conduits (23,24) which are each adapted to deliver and/or collect air jointly to and/or from a column or a line of cages (4) and at least one second conduit (21,22) which is adapted to deliver and/or collect air jointly to and/or from each of the set of first conduits (23,24), the sampling unit(s) (3) being provided in each of the first conduits (23,24) and/or in the second conduit (21,22).

19. A cage rack system (1) according to at least two of any of the preceding claims.

20. A cage rack system (1) according to any of the preceding claims, wherein the system comprises monitoring means (38) for simultaneously or consecutively analyzing and/or monitoring the air and/or exhaust air in response to the sampling unit (3).

21. A cage rack system (1) according to any of the preceding claims, wherein the sampling unit (3) comprises a filter means, a sedimentation means, a gravity means, a centrifugal means, a deflexion means, an inertia means, an electrostatic means, a diffusion means and/or an analytic assay means.

22. A cage rack system (1) according to any of the preceding claims, further comprising a plurality of cages (4).

23. Method for sampling airborne particles from a cage rack system, particularly according to any of the preceding claims, comprising the steps:
(a) ventilating a plurality of cages individually or in groups, ventilating at least the majority of the cages via at least one air-inlet and at least one air-outlet,
(b) delivering air to the air-inlet and/or collecting air from the air-outlet by an air guidance system,
(c) collecting airborne particles from the air by at least one sampling unit, and
(d) providing the sampling unit with a cyclonic flow path to collect the airborne particles to cause a separation of the particles from the air.

24. Method for sampling airborne particles from a cage rack system, particularly according to any of the preceding claims, comprising the steps:
(a) ventilating a plurality of cages individually or in groups, ventilating at least the majority of the cages via at least one air-inlet and at least one air-outlet,
(b) delivering air to the air-inlet and/or collecting air from the air-outlet by an air guidance system,
(c) providing at least one sampling unit for collecting airborne particles from the air, and
(d) attaching and or inserting the sampling unit replaceably at or into the conduit.

25. Use of a cage rack system and/or a method for sampling airborne particles from a cage rack system according to any of the respective preceding claims for detecting pathogens in the cages such as viruses, fungi, bacteria, spores and/or parasites.
